# EUROPEAN PATENT SPECIFICATION

(11) **EP 0 352 011 B1**
(45) Date of publication and mention of the grant of the patent: **03.01.1996**
(21) Application number: 89307074.8
(22) Date of filing: 12.07.1989
(51) Int. Cl.: G06K 9/62

(54) **Method for establishing pixel colour probabilities for use in OCR logic**
Verfahren zur Pixelfarbenwahrscheinlichkeitsbestimmung zur Verwendung in OCR-Logik
Méthode pour établir les probabilités de couleur de pixels pour utilisation dans une logique de reconnaissance de caractères

(30) Priority: 19.07.1988 US 221164
(43) Date of publication of application: 24.01.1990
(73) Proprietor: International Business Machines Corporation, Armonk, N.Y. 10504 (US)
(72) Inventor: Casey, Richard George, Morgan Hill, CA 95037 (US); Mohiuddin, Kottappuram Mohamedali, San Jose, CA 95111 (US)
(74) Representative: Burt, Roger James, Dr.

(56) References cited:
- EP-A- 0 097 820
- EP-A- 0 343 786
- IEEE TRANSACTIONS ON INFORMATION THEORY. vol. IT-30, no. 1, January 1984, NEW YORK US pages 93 - 99; R.G. CASEY ET AL.: 'Decision tree design using a probabilistic model'
- IBM TECHNICAL DISCLOSURE BULLETIN. vol. 22, no. 3, August 1979, NEW YORK US pages 1189 - 1190; R.G. CASEY: 'Automatic generation of OCR logic from scanned characters'
- COMPUTER VISION GRAPHICS AND IMAGE PROCESSING. vol. 27, no. 1, July 1984, NEW YORK US pages 115 - 123; F.A. GERRITSEN ET AL.: 'Implementation of cellular-logic operators using 3*3 convolution and table lookup hardware'

## Description

The present invention relates to designing decision trees for optical character recognition (OCR) devices, and specifically to establishing probabilities of colour for particular pixels that are useful in generating OCR decision trees.

A decision tree is that part of the control system of an OCR machine that determines how the machine interprets picture element (pixel) information that is read in from scanning a document.

One technique for character recognition is to establish a decision tree in which different pixels are successively examined, and branches are taken at each pixel examination based on whether the pixel is black or white. Such decision trees are known and described in the art.

An optical character recognition device is generally only capable of recognising characters printed in a font that the OCR device has been trained to recognise. Typically, an OCR device is programmed by its manufacturer to recognise a few common type fonts. But, with the proliferation of laser printers and the widespread ability to generate numerous type fonts, many users desire the ability to control their OCR devices to recognise characters in a new font, different from any included by the manufacturer.

To design a decision tree for an OCR device to recognise characters in a particular font, the probability, for a given character, that a given pixel in a block of pixels representing that character is black is needed to identify pixels useful in differentiating that character from others. An approach to decision tree design is described in Casey et al., "Decision Tree Design Using a Probabilistic Model," IEEE Transactions on Information Theory, Vol. IT-30, No. 1, pp. 93-99 (1984).

("Character" is used herein to identify the printed or written symbol to be recognised by the OCR device. A character is typically a letter, a numeral, or some other symbol. It is to be recognised that "character" may also refer to a class of symbols, as when two symbols are very similar and the OCR decision logic does not necessarily distinguish between them, e.g. the numeral "1" and lower case "1" in same type fonts. Also, the following description refers to black and white pixels, although other combinations of distinguishable colours may also be used. Further, in the context of black and white pixels, methods and apparatus are described based on black pixels and probabilities of black. Decision tree logic can also be based on white pixels and probabilities of white.)

To obtain the probabilities of black for individual pixels in each character, hundreds of samples of each character in the font to be recognised must be examined. Collecting and identifying the samples is time consuming and expensive. Often, such large number of samples may not be available.

Thus, a need exists for a technique for designing OCR decision trees with very few (ideally only one) samples of each character.

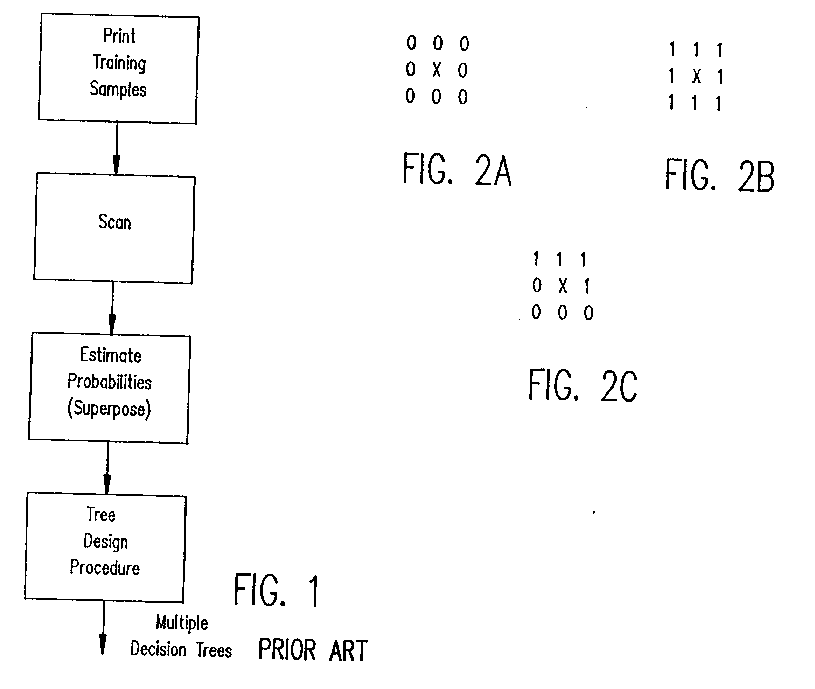

A conventional decision tree generation process is shown in Fig. 1. A large plurality of samples in the font to be recognised is printed. The samples are scanned to generate an array of pixels. For each character or class of characters to be identified, all the samples of that character or class of characters are superimposed, and the probability that a particular pixel is black is counted as the number of times that pixel is black in the samples divided by the number of samples. From such probabilities, certain pixels can be selected for use in generating a decision tree to use in recognising characters in that font. This procedure usually requires an extremely large number of samples for each character or class of characters, typically on the order of 100 to 200 samples, for accurate character recognition.

EP-A-0343786 discloses a method of operating character recognition apparatus in which a plurality of sets of character recognition decision trees are stored in a memory. From the plurality, a set of recognition trees is chosen which has the smallest ratio of unidentified (reject) characters to identified characters, and these trees are modified in response to input signals from an operator on recognition of the characters not automatically recognised (or incorrectly recognised) by the apparatus.

The present invention provides an apparatus and method to reliably estimate the probability of the colour of a particular pixel of a character without examining large numbers of character samples. The method of the invention uses the unexpected experimental observation that the probabilities that pixels have certain colours can be reliably estimated as a function of their neighbourhood states, with the neighbourhood state of a particular pixel being a weighted sum of the values of the pixels in the immediate neighbourhood of the pixel under consideration.

According to one aspect of the invention there is provided a method of operating an optical character recognition device (and the corresponding device) which uses a decision tree for the recognition of characters in a first font, the device having a memory storing a probability table providing the probability, in a second font different from said first font, that a pixel is a first distinguishable colour as a function of its neighbourhood state, the method comprising the steps of: (i) scanning a document having characters in said first font to generate an array of pixels, each having a neighbourhood state; (ii) identifying in said array a cluster of pixels representing a character; (iii) selecting a pixel in said cluster; (iv) determining the neighbourhood state of said pixel in the exact same way as the neighbourhood state was determined for each pixel in the second font; (v) addressing said memory with the neighbourhood state of said selected pixel; (vi) reading from said memory the probability of said selected pixel being said distinguishable colour, associated with the neighbourhood state of said selected pixel, and assigning said probability to said selected pixel; (vii) repeating steps (iii) to (vi) for further selected pixels in said cluster; (viii) generating a new decision tree for said first font using said assigned probabilities of said distinguishable colour, without reliance on pre-existing decision trees ; and (ix) using the new decision tree for interpreting pixels to recognise characters.

Thus, the method of the present invention for automatically controlling a character recognition device to recognise characters in an unknown font includes scanning a document printed in the unknown font to generate an array of pixels. The immediate vicinity of each pixel in the array is then analyzed to compute a so-called neighbourhood state for the pixel. A block of pixels representing a character is identified. A pixel is selected in the block, and a memory is addressed with the neighbourhood state of the selected pixel. The memory has stored in it a probability table providing the probability in a second font that is different from the first unknown font, that a pixel is black as a function of its neighbourhood state. The probability of black associated with the neighbourhood state of the selected pixel is read from the memory, and that probability is assigned to the selected pixel. The decision tree is then generate for the unknown font using that assigned probability of black.

The neighbourhood state of a pixel is preferably determined by identifying and examining a preselected matrix of neighbour pixels as the pixel's neighbourhood.

According to a second aspect of the invention there is provided a method for the recognition of characters in an unknown font by means of an optical character recognition device which uses a decision tree to interpret pixels, the decision tree being created according to the following method steps: scanning a document in a first font to generated an array of pixels;
for each pixel in said array, identifying a preselected matrix of neighbour pixels as the pixel's neighbourhood; determining from said pixel array the probability that a selected pixel is a first distinguishable colour, given the neighbourhood state of the pixel; storing a probability table providing, for each pixel neighbourhood state, the probability the selected pixel is said distinguishable colour; scanning a document in an unknown font to generate a second array of pixels; identifying in said array a plurality of clusters of pixels, each cluster being representative of a character; for each of a plurality of pixels in each of said clusters, identifying said preselected matrix of neighbour pixels as the pixel's neighbourhood, establishing the neighbourhood state of that pixel based on said pixel neighbourhood, addressing said table by the neighbourhood state of that pixel, and reading from said table the probability said pixel is said distinguishable colour; and generating a new decision tree for said unknown fo nt using the probabilities from said table for selected pixels, without reliance on pre-existing decision trees.

According to a third aspect of the invention there is provided a method of controlling an OCR device to recognise characters in an unknown font using a decision tree to interpret pixels for said recognition, the decision tree being generated using probabilities that pixels have a first distinguishable colour, said probabilities being assigned to pixels by the following sequence of steps:
(a) scanning a reference document in a first font and converting said scanned reference document into an array of pixels, wherein:
(i) each converted pixel has either a first colour or a second colour;
(ii) each converted pixel has a neighbourhood comprising a predetermined number of neighbour pixels of said converted pixel; and (iii) said neighbourhood has a neighbourhood state determined by the colours of the neighbour pixels;
(b) determining, for each pixel of said scanned reference document, the colour of that pixel;
(c) determining, for each pixel of said scanned reference document, its neighbourhood state;
(d) dividing the number of times a pixel in a neighbourhood having a first neighbourhood state has said first colour by the number of times in said scanned document said first neighbourhood state appears in said reference document to obtain a probability that a pixel has said first colour given that its neighbourhood has said first neighbourhood state;
(e) repeating step (d) for each possible neighbourhood state to generate a probability table comprising a list of all the possible neighbourhood states and the associated probability of each selected pixel having said first colour;
(f) storing said probability table in said OCR device; and
(g) scanning a second document in an unknown second font and converting said second document into an array of pixels, wherein:
(i) each converted pixel has either a first colour or a second colour;
(ii) each converted pixel has a neighbourhood comprising a predetermined number of neighbour pixels of said converted pixel, wherein said neighbourhood comprises neighbour pixels corresponding to the neighbourhood of the pixels of said reference document; and
(iii) said neighbourhood has a neighbourhood state determined by the colours of said neighbourhood pixels;
(h) determining, for each of a selected plurality of converted pixels in said cluster, the state of its neighbourhood; and
(i) for each selected converted pixel, looking up the corresponding neighbourhood state in said stored probability table and reading out from said probability table the probability said pixel has said first colour.

In order that the invention may be more fully understood it will now be described by way of example and with reference to the accompanying drawings in which:

Fig. 1 is a flow diagram of a conventional decision tree development process.

Figs. 2A, 2B, and 2C illustrate different pixel neighbourhoods.

Fig. 3 illustrates one scheme for pixel neighbourhood numbering for determining the pixel neighbourhood state.

Fig. 4 is a block diagram of apparatus suitable for generating pixel colour probability tables.

Fig. 5 is a block diagram of apparatus suitable for generating new OCR decision logic according to the invention.

Fig. 6 illustrates a block or cluster of pixels representing a character.

Fig. 7 is a flow diagram of OCR decision tree generation using the invention.

The colour of a pixel in a block of pixels depends on the character class to which the pixel belongs. Applicants have found that, unexpectedly, the colour of the pixel can be predicted solely as a function of the neighbourhood state of the pixel, without any knowledge of the character class to which it belongs.

In a given font, the colour of a pixel in a binary pixel pattern may be predicted, given the colours of the neighbouring pixels. Refer, for example, to Fig. 2. In Fig. 2A, a pixel X of unknown colour is shown surrounded by its eight adjacent neighbouring pixels, each of which is shown to have a value 0 (indicating the colour white). The central pixel X has a very high probability of being white (having a value 0). The probability is not exactly 1.00, as there may be a stray dot of black at that point. Similarly, referring to Fig. 2B, the central pixel X of the illustrated neighbourhood has a very high probability of being black (having a value 1), as its eight surrounding neighbour pixels are black.

An example of a pixel X having a neighbourhood that is half black and half white is shown in Fig. 2C. The likelihood that the pixel at the centre of this neighbourhood has value 1 can be statistically determined by examining a large number of samples. An examination of the ability to predict the colour of a pixel given the colour of neighbouring pixels is provided in Mohiuddin, et al., "Lossless Binary Image Compression Based on Pattern Matching," International Conference on Computers, Systems & Signal Processing, Bangalore, India (Dec. 9 - 12, 1984).

The pixel neighbourhood comprises a preselected number of surrounding neighbour pixels in the horizontal and vertical directions. Thus, the pixel and its neighbourhood form a grid or matrix of pixels. In the illustrated embodiment, the neighbourhood comprises the eight adjacent surrounding pixels to form a square 3 X 3 grid. Other arrangements are possible, and the neighbourhoods need not be square.

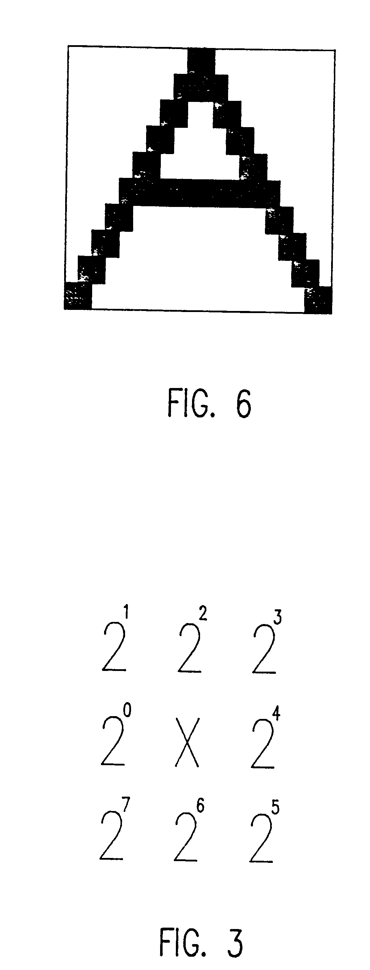

The state of a pixel may be defined as a weighted sum of the elements of its neighbourhood. For example, arbitrarily, the neighbour pixels may be numbered clockwise starting from the west neighbour as shown in Fig. 3. The west neighbour is assigned the value 2⁰(=1). The northwest neighbour is assigned the value 2¹(=2), and so forth, with the southwest neighbour assigned the value 2⁷(=128). The actual numbering itself is not critical, as the objective of the numbering is only to provide a unique identification for each possible neighbourhood state. Since there are eight members in the neighbourhood, there could be a total of 256 different states.

The neighbourhood state is obtained by summing the values of the neighbours that are black. Thus, the pixel neighbourhood shown in Fig. 2A, using the numbering system shown in Fig. 3, has a neighbourhood state or value of 0, while the neighbourhood shown in Fig. 2B has a neighbourhood state value of 255. The neighbourhood shown in Fig. 2C has a neighbourhood state value of 30, the sum of 2¹+2+2³+2⁴.

From a scan of a document of text, the number of times each neighbourhood state occurs can be determined, as can the number of times out of those occurrences that the centre pixel is black. Thus, the probability that the centre pixel is black given that its neighbourhood state has a certain value can be determined. This is done by dividing the number of times pixels with a certain neighbourhood are black by the number of times that neighbourhood state occurs. From this, a table may be generated with an entry of the probability of black for each of the 256 possible neighbourhood states.

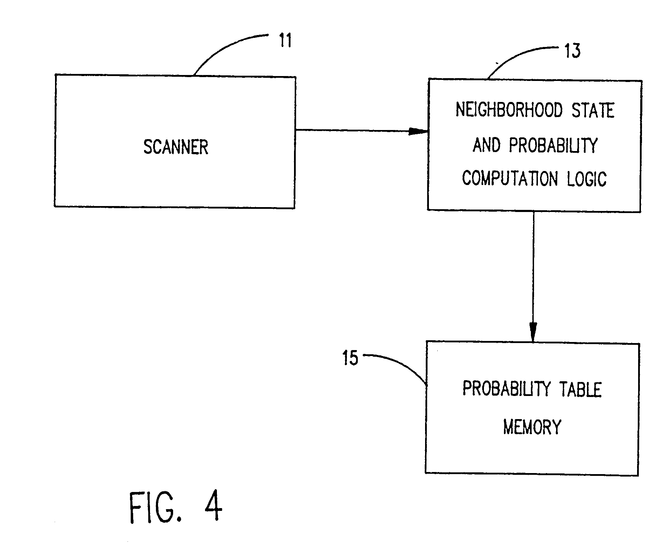

A block diagram of equipment suitable for generating and storing such a probability table is shown in Fig. 4. The scanner 11 scans a reference document from which the statistics are to be taken and supplies the binary pixel array to the neighbourhood state and probability computation logic 13. For each pixel in the array, the logic 13 adds together the assigned values for all the neighbour pixels that are black to obtain the neighbourhood state value for that pixel. The colour of that pixel under consideration is also determined. Once those statistics are gathered, for each neighbourhood state value, the percentage of time that the centre pixel was black can be readily determined. That percentage provides the probability of black given the neighbourhood state value. Thus, the logic 13 has some memory for temporary storage of various counts as the pixel arrays are examined. The computed probability of black as a function of the neighbourhoods state (probability table) is read into a memory 15 for later use.

According to the invention, applicants have discovered that, unexpectedly, the probability table providing the probability of black for a pixel given its neighbourhood state, generated as described above, is substantially invariant, regardless of the character class the pixel is located in. Thus, the probability table is also independent of the font being examined. Between vastly different fonts or even between fonts representing different languages, the probability table remains substantially constant. Therefore, the probabilities previously generated and stored for one font may be used in controlling the OCR device to recognise the new font.

Thus, to develop a decision tree for a new font, different from the font used in generating the probability table, the probability table generated for one font may be used to significantly reduce the amount of time and the number of symbol or character samples necessary to generate the statistics sufficient for the OCR machine to learn the new font and develop a decision tree for it. Additionally, multiple examples of certain characters in the new font may not be available, meaning that the probabilities of colour for pixels cannot be estimated using conventional methods. Consequently, optical character recognition cannot be carried out on the new font using conventional means.

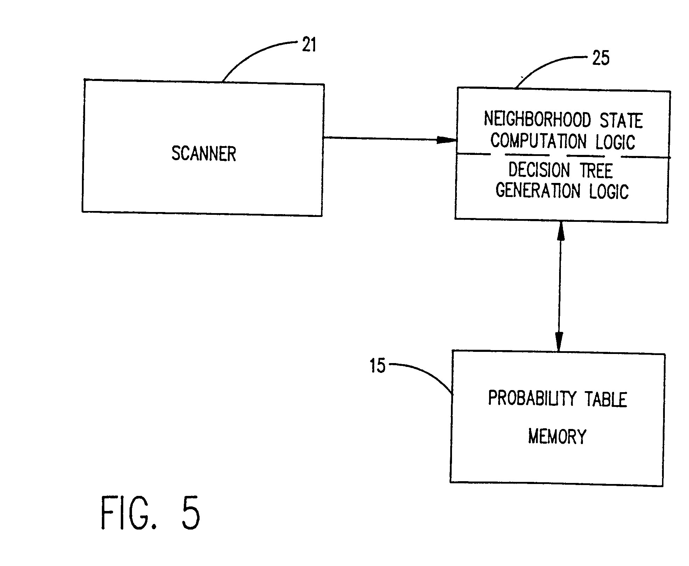

Fig. 5 is a block diagram of a machine suitable for generating new OCR decision logic. The apparatus of Fig. 5 used to generate new OCR decision logic may be the same as that of Fig. 4 used in the development of the probability table. The scanner 21 may be the same as the scanner 11 of the system of Fig. 4. The neighbourhood state computation portion of the logic 25 may be the same as the portion of the neighbourhood state and probability computation logic 13 shown in Fig. 4. The memory 15, which stores the probability table, may be the same as the memory in which the probability table is originally stored in Fig. 4. To generate the OCR decision tree logic, a two way communication between the memory 15 and the logic 25 that performs neighbourhood state computation and decision tree generation, while the system of Fig. 4 only requires that the neighbourhood state and probability computation logic be able to read data into the memory 15, and need not read data from the memory.

The scanner 21 scans a teaching document printed in the unknown font to be identified by the machine. The scanner 21 converts the document into an array of pixels in a conventional manner. Each pixel is either black or white. Each pixel also has a neighbourhood of the type used in developing the probability table stored in the memory. The same neighbourhood is used around each pixel as was used in developing the probability table, with corresponding neighbour pixels assigned the same value. In this way, a pixel in the teaching document and a pixel in the reference document used in generating the probability table, both surrounded by pixels of the same colours in the same positions, will have the same neighbourhood state value. Using the numbering scheme shown in Fig. 3, the eight pixels surrounding that pixel under examination become the pixel's neighbourhood. The neighbour pixels are assigned values as shown in Fig. 3. The west neighbour pixel is assigned the value 2⁰=1, the northwest neighbour 2¹=2, and so forth, with the southwest neighbour assigned the value 2⁷=128.

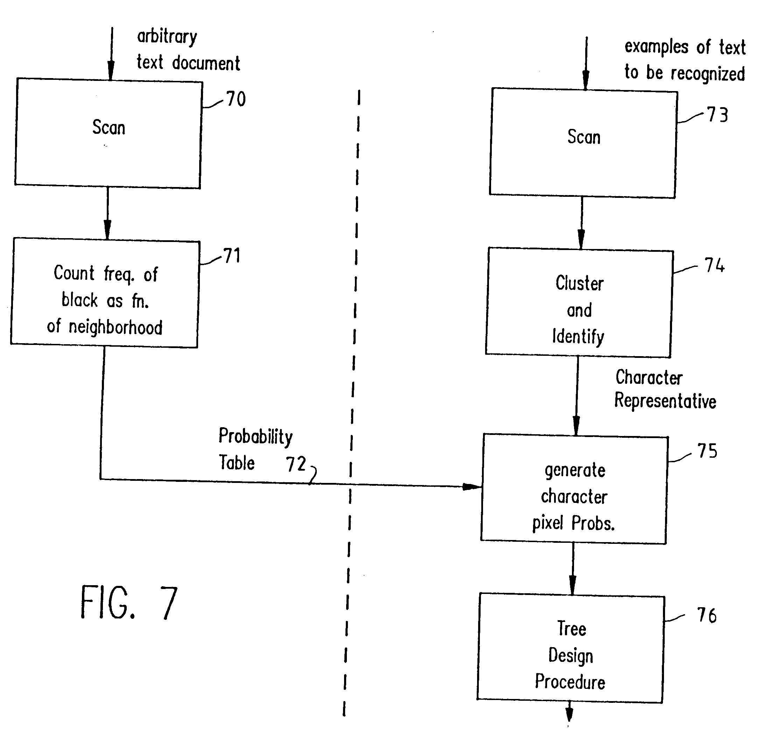

Blocks or clusters of pixels, each block representing a character, may be identified in the array of pixels representing the scanned page. An exemplary character pattern of pixels representing the capital letter "A" (and greatly enlarged) is shown in Fig. 6. Such a pattern may be a square having 20 pixels on a side for a total cluster of 400 pixels representing the character.

A pixel to be examined is selected from within the character pattern. The neighbourhood state computation logic portion of the logic unit 25 determines the pixel's neighbourhood value using the same method for assigning values used in generating the probability table stored in the memory 15. Once the neighbourhood state or value is established for the pixel, that neighbourhood value is used to address the probability table previously stored in the memory 15. The associated probability stored for that neighbourhood state is read out from the memory. The probability read from the stored probability table then is assigned to the selected pixel in the character block for that character of the new font. That assigned probability is then used as the probability of black for that pixel in generating a decision tree for the new font in a known manner.

The decision tree logic design uses the different probabilities of black for various pixels in the different character pixel blocks to determine which pixels should be examined when presented with a new document in the new font. The objective is to find pixels that are useful in distinguishing different characters to be recognised. An appropriate method of designing a decision tree using such probability statistics is described in Casey and Nagy, "Decision Tree Design Using a Probabilistic Model," IEEE Transactions on Information Theory, Vol. IT-30, No. 1, pp. 93-99 (January, 1984).

If more than one sample of a character appears in the teaching document, and the samples are not identical, an average or ideal representative of the character or pixel block representing that character is used for establishing the colour of the neighbour pixels involved in the neighbourhood state determination.

The averaging of the character involves comparing the different occurrences of that character, and determining for each pixel in the character block whether the pixel is black more often than white or white more often than black. For each pixel that is more often black (at least 50%), that pixel is said to be black for the purposes of being a neighbour to determine the neighbourhood states of the pixels within that pixel block. Similarly, a pixel that is white more than 50% of the time is said to be white for the neighbourhood value determinations. In this way a more "typical" representative for each character class is generated.

Fig. 7 illustrates a flow diagram of the process of teaching an OCR device to recognise a new font, incorporating the present invention. A description of that flow diagram will summarise the preceding description of the preferred embodiment.

A reference document of text in any font is scanned (70). The frequency that a pixel is black given that it has a certain neighbourhood state is counted to generate a probability table providing the pixel probability of black as a function of neighbourhood state (71). This probability table generation function (72) needs to be done only once, and need not be repeated every time a document in a new font is to be recognised.

When decision tree logic is to be generated for a new font, a document printed in that new font is scanned (73). The clusters or blocks of pixels or character patterns representing different characters or classes of characters are identified (74). If more than one representative of a character is identified, those representatives are averaged to obtain a character representative.

Using the character representative, the pixel probabilities for pixels in each character block are generated (75). From those probabilities the tree design logic can create appropriate OCR decision tree logic (76).

With the invention, the generation of the probability table (the portion of the diagram in Fig. 7 left of the dashed line) may take place in a different machine than the generation of the character recognition tree (the portion of the diagram in Fig. 7 right of the dashed line). Thus, using the invention, the manufacturer of the optical character recognition device may store the probability table in the device memory, and may in many cases store a few character recognition decision trees in the device. The manufacturer also stores in the OCR device the programming necessary to enable the device to generate a character recognition decision tree from the pixel probability statistics. Then, if the user wishes to have the OCR device recognise a new font, different from any of the ones for which the manufacturer has stored decision logic trees, the user may have the OCR device generate a new decision tree for the new font.

A more detailed preferred embodiment is a method for controlling an OCR device to recognise characters that in a font which it has previously not been controlled to recognise by the steps of assigning a probability that a pixel has a first colour to said pixel and comprising: (a) scanning a reference document printed in a first font and converting said scanned reference document into an array of pixels, wherein: (i) each converted pixel has either a first colour or a second colour; and (ii) each converted pixel has a neighbourhood comprising a predetermined number of neighbour pixels adjacent said converted pixel; and (iii) said neighbourhood has a neighbourhood state determined by the colours of the neighbour pixels; (b) determining, for each pixel of said scanned reference document, the colour of that pixel; (c) determining, for each pixel of said scanned reference document, its neighbourhood state; (d) dividing the number of times a pixel in a neighbourhood having a first neighbourhood state has said first colour by the number of times in said scanned document said first neighbourhood state appears in said reference document to obtain a probability that a pixel has said first colour given that its neighbourhood has said first neighbourhood state; (e) repeating step (d) for each possible neighbourhood state to generate a probability table comprising a list of all the possible neighbourhood states and the associated probability of the centre pixel having said first colour; (f) storing said probability table in said OCR device; and (g) scanning a second document printed in an unknown second font and converting said second document into an array of pixels, wherein:
(i) each converted pixel has either a first colour or a second colour;
(ii) each converted pixel has a neighbourhood comprising a predetermined number of neighbour pixels adjacent said converted pixel, wherein said neighbourhood comprises the corresponding neighbour pixels as the neighbourhood of the pixels of said reference document; and
(iii) said neighbourhood has a neighbourhood state determined by the colours of said neighbour pixels; (h) determining, for each pixel, the state of its neighbourhood; and (i) for each pixel, looking up the corresponding neighbourhood state in said stored probability table and reading out from said probability table the probability said pixel has said first colour.

The method also includes in the step of scanning the second document identifying the first character printed on said second document and defined by the pixels in a pixel cluster; determining if said first character appears more than once in said second document; and if said first character appears more than once in said second document, averaging a plurality of the occurrences of said first character to obtain an average first character. Preferably the step of averaging the first character comprises the steps of comparing the different occurrences of said first character; determining for each pixel in the character window for said first character whether the pixel has said first colour more often than said second colour; for each pixel that has said first colour more often than said second colour, that pixel is determined to have said first colour in said averaged first character; and for each pixel that has said second colour more often than said first colour, that pixel is determined to have said second colour in said averaged first character.

With the present invention, it will be seen that only a single representative is required for each character in a new font. From that single representative, the OCR device can generate the pixel colour probabilities necessary for the tree design logic to create a decision tree for the new font. This greatly simplifies and speeds the generation of new decision trees for recognising new fonts.

## Claims

1. A method of operating an optical character recognition device which uses a decision tree for the recognition of characters in a first font, the device having a memory storing a probability table providing the probability, in a second font different from said first font, that a pixel is a first distinguishable colour as a function of its neighbourhood state, the method comprising the steps of:
(i) scanning a document having characters in said first font to generate an array of pixels, each having a neighbourhood state;
(ii) identifying in said array a cluster of pixels representing a character;
(iii) selecting a pixel in said cluster;
(iv) determining the neighbourhood state of said pixel in the exact same way as the neighbourhood state was determined for each pixel in the second font;
(v) addressing said memory with the neighbourhood state of said selected pixel;
(vi) reading from said memory the probability of said selected pixel being said distinguishable colour, associated with the neighbourhood state of said selected pixel, and assigning said probability to said selected pixel;
(vii) repeating steps (iii) to (vi) for further selected pixels in said cluster;
(viii)generating a new decision tree for said first font using said assigned probabilities of said distinguishable colour without reliance on pre-existing decision trees, and ;
(ix) using the new decision tree for interpreting pixels to recognise characters.

2. A method according to claim 1, wherein the neighbourhood state of each pixel is determined by examining a matrix comprising a preselected number of pixels surrounding said pixel under consideration.

3. A method according to claim 2, wherein the neighbourhood state of each pixel comprises a weighted sum of values assigned to pixels in said matrix based on their positions in said matrix.

4. A method according to claim 2 or claim 3, wherein said matrix comprises the eight pixels immediately adjacent the pixel under consideration.

5. A method according to any one of claims 1 to 4, additionally comprising identifying a plurality of additional clusters of pixels, each cluster representing a character.

6. A method according to claim 5, additionally comprising comparing clusters representing the same character, and forming an average cluster for that character for determining the neighbourhood states of pixels.

7. A method according to claim 6, wherein said step of forming an average cluster comprises assigning to each pixel said distinguishable colour if the corresponding pixel in at least half the compared blocks is said distinguishable colour.

8. An optical character recognition device having means for generating a decision tree for interpreting pixels to recognise characters in a first font, the device having a memory storing a probability table providing the probability, in a second font different from said first font, that a pixel is a first distinguishable colour as a function of its neighbourhood state, said decision tree generation means functioning according to the following steps:
(i) scanning a document having characters in said first font to generate an array of pixels, each having a neighbourhood state;
(ii) identifying in said array a cluster of pixels representing a character;
(iii) selecting a pixel in said cluster;
(iv) determining the neighbourhood state of said pixel in the exact same way as the neighbourhood state was determined for each pixel in the second font;
(v) addressing said memory with the neighbourhood state of said selected pixel;
(vi) reading from said memory the probability of said selected pixel being said distinguishable colour, associated with the neighbourhood state of said selected pixel, and assigning said probability to said selected pixel;
(vii) repeating steps (iii) to (vi) for further selected pixels in said cluster; and
(viii) generating a new decision tree for said first font using said assigned probabilities of said distinguishable colour, without reliance on pre-existing decision trees.

9. A method for the recognition of characters in an unknown font by means of an optical character recognition device which uses a decision tree to interpret pixels, the decision tree being created according to the following method steps:
scanning a document in a first font to generated an array of pixels;
for each pixel in said array, identifying a preselected matrix of neighbour pixels as the pixel's neighbourhood;
determining from said pixel array the probability that a selected pixel is a first distinguishable colour, given the neighbourhood state of the pixel;
storing a probability table providing, for each pixel neighbourhood state, the probability the selected pixel is said distinguishable colour;
scanning a document in an unknown font to generate a second array of pixels;
identifying in said array a plurality of clusters of pixels, each cluster being representative of a character;
for each of a plurality of pixels in each of said clusters, identifying said preselected matrix of neighbour pixels as the pixel's neighbourhood, establishing the neighbourhood state of that pixel based on said pixel neighbourhood, addressing said table by the neighbourhood state of that pixel, and reading from said table the probability said pixel is said distinguishable colour; and
generating a new decision tree for said unknown font using the probabilities from said table for selected pixels, without reliance on pre-existing decision trees.

10. The method of claim 9 wherein the neighbourhood state of each pixel comprises a weighted sum of values assigned to the pixels in said matrix based on their positions in said matrix.

11. The method of claim 9 or claim 10 additionally comprising:
comparing a plurality of clusters representing the same printed character; and
forming an average cluster for that character by assigning to each pixel in said average cluster said distinguishable colour if the corresponding pixel in at least half the compared blocks is said distinguishable colour.

12. A method of controlling an OCR device to recognise characters in an unknown font using a decision tree to interpret pixels for said recognition, the decision tree being generated using probabilities that pixels have a first distinguishable colour, said probabilities being assigned to pixels by the following sequence of steps:
(a) scanning a reference document in a first font and converting said scanned reference document into an array of pixels, wherein:
(i) each converted pixel has either a first colour or a second colour: and
(ii) each converted pixel has a neighbourhood comprising a predetermined number of neighbour pixels of said converted pixel; and
(iii) said neighbourhood has a neighbourhood state determined by the colours of the neighbour pixels;
(b) determining, for each pixel of said scanned reference document, the colour of that pixel;
(c) determining, for each pixel of said scanned reference document, its neighbourhood state;
(d) dividing the number of times a pixel in a neighbourhood having a first neighbourhood state has said first colour by the number of times in said scanned document said first neighbourhood state appears in said reference document to obtain a probability that a pixel has said first colour given that its neighbourhood has said first neighbourhood state;
(e) repeating step (d) for each possible neighbourhood state to generate a probability table comprising a list of all the possible neighbourhood states and the associated probability of each selected pixel having said first colour;
(f) storing said probability table in said OCR device; and
(g) scanning a second document in an unknown second font and converting said second document into an array of pixels, wherein:
(i) each converted pixel has either a first colour or a second colour;
(ii) each converted pixel has a neighbourhood comprising a predetermined number of neighbour pixels of said converted pixel, wherein said neighbourhood comprises neighbour pixels corresponding to the neighbourhood of the pixels of<said reference document; and
(iii) said neighbourhood has a neighbourhood state determined by the colours of said neighbourhood pixels;
(h) determining, for each of a selected plurality of converted pixels in said cluster, the state of its neighbourhood; and
(i) for each selected converted pixel, looking up the corresponding neighbourhood state in said stored probability table and reading out from said probability table the probability said pixel has said first colour.

13. A method according to claim 12, wherein said step of scanning said second document comprises:
identifying a first character in said second document and defined by the pixels in a pixel cluster;
determining if said first character appears more than once in said second document; and
if said first character appears more than once in said second document, averaging a plurality of the occurrences of said first character to obtain an average first character.

14. A method according to claim 13, wherein said step of averaging said first character comprises:
comparing the different occurrences of said first character;
determining for each pixel in the character window for said first character whether the pixel has said first colour more often than said second colour;
for each pixel that has said first colour more often than said second colour, that pixel is determined to have said first colour in said averaged first character; and
for each pixel that has said second colour more often than said first colour, that pixel is determined to have said second colour in said averaged first character.

## Patentansprüche

1. Ein Verfahren zum Betrieb einer Vorrichtung zur optischen Zeichenerkennung, unter Verwendung eines Entscheidungsbaums zur Erkennung der Zeichen in einer ersten Schrift, wobei die Vorrichtung einen Speicher besitzt, in dem eine Wahrscheinlichkeitstabelle gespeichert ist, welche die Wahrscheinlichkeit angibt, daß bei einer von der ersten Schrift verschiedenen zweiten Schrift ein Pixel als Funktion eines Nachbarschaftsstatus eine erste unterscheidbare Farbe aufweist, und wobei das Verfahren aus folgenden Schritten besteht:
(i) Einlesen eines Dokuments mit Zeichen in der ersten Schrift zur Erzeugung einer Pixelmatrix, in der jedes Pixel einen Nachbarschaftsstatus besitzt;
(ii) Identifikation eines Pixelmusters in der Matrix, das ein Zeichen darstellt;
(iii) Auswählen eines Pixels aus dem Muster;
(iv) Bestimmung des Nachbarschaftsstatus des Pixels auf genau die gleiche Weise wie der Nachbarschaftsstatus jedes Pixels in der zweiten Schrift bestimmt wurde;
(v) Adressierung des Speichers mit dem Nachbarschaftsstatus des ausgewählten Pixels;
(vi) Auslesen der Wahrscheinlichkeit, daß das ausgewählte Pixel die seinem Nachbarschaftsstatus zugeordnete unterscheidbare Farbe aufweist, aus dem Speicher und Zuweisung dieser Wahrscheinlichkeit an das ausgewählte Pixel;
(vii) Wiederholen der Schritte (iii) bis (vi) für weitere ausgewählte Pixel des Musters;
(viii) Generieren eines neuen Entscheidungsbaums für die erste Schrift anhand der Wahrscheinlichkeiten der un-terscheidbaren Farbe ohne Zuhilfenahme bereits vorhandener Entscheidungsbäume; sowie
(ix) Verwendung des neuen Entscheidungsbaums für die Interpretation der Pixel bei der Zeichenerkennung.

2. Ein Verfahren gemäß Anspruch 1, bei dem der Nachbarschaftsstatus jedes Pixels bestimmt wird, indem eine Matrix untersucht wird, die aus einer vorgegebenen Anzahl von Pixeln um das in Frage stehende Pixel besteht.

3. Ein Verfahren gemäß Anspruch 2, bei dem der Nachbarschaftsstatus jedes Pixels eine gewichtete Summe der Werte enthält, die den Pixeln der Matrix aufgrund ihrer Position in der Matrix zugeordnet sind.

4. Ein Verfahren gemäß Anspruch 2 oder 3, bei dem die Matrix die acht Pixel umfaßt, welche dem in Frage stehenden Pixel unmittelbar benachbart sind.

5. Ein Verfahren gemäß Anspruch 1 bis 4, das außerdem einen Schritt umfaßt, in dem mehrere zusätzliche Pixelmuster, die jeweils ein Zeichen darstellen, identifiziert werden.

6. Ein Verfahren gemäß Anspruch 5, das außerdem einen Schritt umfaßt, in dem Muster, die das gleiche Zeichen darstellen, verglichen werden, und in dem zur Bestimmung des Nachbarschaftsstatus von Pixeln ein Durchschnittsmuster für das betreffende Zeichen gebildet wird.

7. Ein Verfahren gemäß Anspruch 6, bei dem der Schritt der Bildung eines Durchschnittsmusters einen Teilschritt enthält, in dem jedem Pixel die unterscheidbare Farbe zugewiesen wird, wenn das betreffende Pixel in mindestens der Hälfte der verglichenen Blöcke diese unterscheidbare Farbe aufweist.

8. Eine Vorrichtung zur optischen Zeichenerkennung, die Mittel zur Erzeugung eines Entscheidungsbaums für die Interpretation von Pixeln zur Erkennung von Zeichen in einer ersten Schrift besitzt und einen Speicher enthält, in dem eine Wahrscheinlichkeitstabelle gespeichert ist, in der aufgelistet ist, wie hoch die Wahrscheinlichkeit ist, daß ein Pixel in einer von der ersten Schrift verschiedenen zweiten Schrift als Funktion seines Nachbarschaftsstatus eine erste unterscheidbare Farbe aufweist, wobei das Mittel zur Erzeugung des Entscheidungsbaums folgende Schritte ausführt:
(i) Einlesen eines Dokuments mit Buchstaben in der ersten Schrift zur Erzeugung einer Pixelmatrix, in der jedes Pixel einen Nachbarschaftsstatus besitzt;
(ii) Identifikation eines Pixelmusters in der Matrix, das ein Zeichen darstellt;
(iii) Auswählen eines Pixels aus dem Muster;
(iv) Bestimmung des Nachbarschaftsstatus des Pixels auf genau die gleiche Weise wie der Nachbarschaftsstatus jedes Pixels in der zweiten Schrift bestimmt wurde;
(v) Adressierung des Speichers mit dem Nachbarschaftsstatus des ausgewählten Pixels;
(vi) Auslesen der Wahrscheinlichkeit, daß das ausgewählte Pixel die seinem Nachbarschaftsstatus zugeordnete unterscheidbare Farbe aufweist, aus dem Speicher und Zuweisung dieser Wahrscheinlichkeit an das ausgewählte Pixel;
(vii) Wiederholen der Schritte (iii) bis (vi) für weitere ausgewählte Pixel des Musters;
(viii) Generieren eines neuen Entscheidungsbaums für die erste Schrift anhand der Wahrscheinlichkeiten der unterscheidbaren Farbe ohne Zuhilfenahme bereits vorhandener Entscheidungsbäume.

9. Ein Verfahren zur Erkennung von Zeichen einer unbekannten Schrift durch eine Vorrichtung zur optischen Zeichenerkennung mit einem Entscheidungsbaum zur Interpretation von Pixeln, der nach dem aus folgenden Schritten bestehenden Verfahren erstellt wurde:
zur Erzeugung einer Pixelmatrix ein Dokument in einer ersten Schrift einlesen;
für jedes Pixel eine zuvor ausgewählte Matix von benachbarten Pixeln als Nachbarschaft des Pixels angeben;
anhand der Pixelmatrix die Wahrscheinlichkeit bestimmen, daß ein ausgewähltes Pixel bei einem bestimmten Nachbarschaftsstatus eine erste unterscheidbare Farbe aufweist;
eine Wahrscheinlichkeitstabelle speichern, in der für jeden Nachbarschaftsstatus eines Pixels die Wahrscheinlichkeit aufgeführt ist, daß das ausgewählte Pixel die unterscheidbare Farbe aufweist;
ein Dokument in einer unbekannten Schrift einlesen, um eine zweite Pixelmatrix zu erzeugen;
in der Matrix mehrere Pixelmuster identifizieren, die jeweils ein Zeichen darstellen;
für jedes Pixel in jedem Muster die vorher ausgewählte Matrix von Nachbarpixeln als Nachbarschaft des Pixels auswählen und so anhand der Nachbarschaft des Pixels seinen Nachbarschaftsstatus bestimmen, und anschließend die Tabelle anhand des Nachbarschaftsstatus des betreffenden Pixels adressieren und in der Tabelle die Wahrscheinlichkeit, daß das Pixel die unterscheidbare Farbe besitzt, ablesen;
mit Hilfe der für ausgewählte Pixel aus der Tabelle ausgelesenen Wahrscheinlichkeiten einen neuen Entscheidungsbaum für die unbekannte Schrift erzeugen, ohne daß auf bereits vorhandene Entscheidungsbäume zurückgegriffen wird.

10. Das Verfahren gemäß Anspruch 9, wobei der Nachbarschaftsstatus jedes Pixels eine gewichtete Summe der Werte enthält, die den Pixeln in der Matrix aufgrund ihrer Position in der Matrix zugewiesen sind.

11. Ein Verfahren gemäß Anspruch 9 oder 10, das ferner folgende Schritte umfaßt:
Vergleichen mehrerer Muster, die das gleiche gedruckte Zeichen darstellen; und
Erzeugung eines Durchschnittsmusters, indem jedem Pixel im Durchschnittsmuster die unterscheidbare Farbe zugewiesen wird, wenn das betreffende Pixel in mindestens der Hälfte der verglichenen Blöcke die unterscheidbare Farbe besitzt.

12. Ein Verfahren zur Steuerung einer OCR-Vorrichtung zur Erkennung von Zeichen einer unbekannten Schrift mit Hilfe eines Entscheidungsbaums zur Interpretation von Pixeln für die Zeichenerkennung, wobei der Entscheidungsbaum anhand der Wahrscheinlichkeiten, daß Pixel eine erste unterscheidbare Farbe aufweisen, erzeugt wird, und den Pixeln die Wahrscheinlichkeiten durch ein Verfahren mit folgenden Schritten zugewiesen werden:
(a) Einlesen eines Referenzdokuments in einer ersten Schrift und Konvertierung des eingelesenen Referenzdokuments in ein Pixelmuster, wobei
(i) jedes konvertierte Pixel entweder eine erste oder eine zweite Farbe besitzt; und
(ii) jedes konvertierte Pixel eine Nachbarschaft aus einer vorgegebenen Anzahl von Nachbarpixeln der konvertierten Pixel besitzt; und
(iii) die Nachbarschaft einen durch die Farben der Nachbarpixels bestimmten Nachbarschaftsstatus besitzt;
(b) Bestimmung der Farbe jedes Pixels des eingelesenen Referenzdokuments;
(c) Bestimmung des Nachbarschaftsstatus jedes Pixels des eingelesenen Referenzdokuments;
(d) Division der Häufigkeit, mit der ein Pixel in einer Nachbarschaft mit einem ersten Nachbarschaftsstatus die erste Farbe aufweist, durch die Häufigkeit, mit der im eingelesenen Dokument der erste Nachbarschaftsstatus im Referenzdokument vorkommt, um die Wahrscheinlichkeit zu ermitteln, daß ein Pixel die erste Farbe aufweist, wenn seine Nachbarschaft den ersten Nachbarschaftsstatus besitzt;
(e) Wiederholung von Schritt (d) für jeden möglichen Nachbarschaftsstatus zur Berechnung einer Wahrscheinlichkeitstabelle, in der alle möglichen Nachbarschaftsstatus und die zugehörigen Wahrscheinlichkeiten jedes ausgewählten Pixels in der ersten Farbe aufgelistet sind;
(f) Speichern der Wahrscheinlichkeitstabelle in der OCR-Vorrichtung; und
(g) Einlesen eines zweiten Dokuments in einer unbekannten zweiten Schrift und Konvertierung dieses zweiten Dokuments in eine Pixelmatrix, wobei:
(i) jedes konvertierte Pixel entweder eine erste oder eine zweite Farbe besitzt;
(ii) jedes konvertierte Pixel eine Nachbarschaft aus einer vorgegebenen Zahl von Nachbarpixeln der konvertierten Pixel besitzt, wobei die Nachbarschaft Nachbarpixel enthält, die dem Nachbarschaftsstatus der Pixel des Referenzdokuments entsprechen; und
(iii) die Nachbarschaft einen durch die Farben der Nachbarpixel bestimmten Nachbarschaftsstatus besitzt.
(h) Bestimmung des Nachbarschaftsstatus von jedem von mehreren konvertierten Pixeln in dem Muster; und
(i) für jedes ausgewählte konvertierte Pixel Ablesen des Nachbarschaftsstatus aus der gespeicherten Wahrscheinlichkeitstabelle und Auslesen der Wahrscheinlichkeit, daß das Pixel die erste Farbe besitzt, aus der Wahrscheinlichkeitstabelle.

13. Ein Verfahren gemäß Anspruch 12, bei dem der Schritt des Einlesens des zweiten Dokuments folgende Schritte umfaßt:
Identifikation eines ersten durch die Pixel in einem Pixelmuster definierten Zeichens im zweiten Dokument;
Ermitteln, ob das erste Zeichen mehr als einmal im zweiten Dokument vorkommt; und
falls das erste Zeichen mehr als einmal im zweiten Dokument vorkommt, Erzeugung eines durchschnittlichen ersten Zeichens aus mehreren Vorkommen des ersten Zeichens.

14. Ein Verfahren gemäß Anspruch 13, bei dem der Schritt der Durchschnittsbildung des ersten Zeichens folgende Teilschritte umfaßt:
die verschiedenen Vorkommen des ersten Zeichens vergleichen;
für jedes Pixel im Zeichenfenster für das erste Zeichen ermitteln, ob das Pixel die erste Farbe öfter aufweist als die zweite Farbe;
für jedes Pixel, das die erste Farbe öfter als die zweite aufweist, wird festgelegt, daß es im durchschnittlichen ersten Zeichen die erste Farbe besitzt; und
für jedes Pixel, das die zweite Farbe öfter als die erste aufweist, wird festgelegt, daß es im durchschnittlichen ersten Zeichen die zweite Farbe besitzt.

## Revendications

1. Méthode de fonctionnement d'un dispositif optique de reconnaissance de caractères, utilisant un arbre de décision, pour l'identification de caractères d'une première police, le dispositif ayant une mémoire stockant une table de probabilité fournissant la probabilité, dans une deuxième police, différente de ladite première police, qu'un pixel ait une première couleur discernable, en fonction de son état de voisinage, le procédé comprenant les étapes de :
(i) exploration d'un document ayant des caractères dans ladite première police, pour générer une matrice de pixels, ayant chacun un état de voisinage;
(ii) identification dans ladite matrice d'un groupe de pixels représentant un caractère;
(iii) sélection d'un pixel dans ledit groupe;
(iv) détermination de l'état de voisinage dudit pixel exactement de la même manière que lorsque l'état de voisinage a été déterminé pour chaque pixel, dans la deuxième police;
(v) adressage de ladite mémoire avec l'état de voisinage dudit pixel sélectionné;
(vi) lecture dans ladite mémoire de la probabilité que ledit pixel sélectionné soit de ladite couleur discernable, associée à l'état de voisinage dudit pixel sélectionné, et affectation de ladite probabilité audit pixel sélectionné;
(vii) répétition des étapes (iii) à (vi) afin de sélectionner d'autres pixels dans ledit groupe;
(viii) génération d'un nouvel arbre de décision pour ladite première police, en utilisant lesdites probabilités affectées de ladite couleur discernable, sans se fier à aucun des arbres de décision pré-existants, et
(ix) utilisation du nouvel arbre de décision pour interpréter les pixels afin d'identifier des caractères.

2. Méthode selon la revendication 1, dans laquelle l'état de voisinage de chaque pixel est déterminé par examen d'une matrice comprenant un nombre pré-sélectionné de pixels entourant ledit pixel en cours de considération.

3. Méthode selon la revendication 2, dans laquelle l'état de voisinage de chaque pixel comprend une somme pondérée de valeurs affectées auxdits pixels se trouvant dans ladite matrice, d'après leurs positions dans ladite matrice.

4. Méthode selon la revendication 2 ou 3, dans laquelle ladite matrice comprend les huit pixels immédiatement adjacents au pixel en cours de considération.

5. Méthode selon l'une quelconque des revendications 1 à 4, comprenant en plus l'identification d'une pluralité de groupes additionnels de pixels, chaque groupe représentant un caractère.

6. Méthode selon la revendication 5, comprenant en plus une comparaison de groupes représentant le même caractère et formation d'un groupe moyen pour ce caractère, afin de déterminer les états de voisinage des pixels.

7. Méthode selon la revendication 6, dans laquelle ladite étape de formation d'un groupe moyen comprend l'affectation à chaque pixel de ladite couleur discernable si le pixel correspondant est, au moins dans la moitié des blocs comparés, de ladite couleur discernable.

8. Dispositif optique de reconnaissance de caractères comprenant des moyens pour générer un arbre de décision afin d'interpréter des pixels pour identifier des caractères dans une première police, le dispositif ayant une mémoire stockant une table de probabilité fournissant la probabilité, dans une deuxième police différente de ladite première police, qu'un pixel ait une première couleur discernable, en fonction de son état de voisinage, ledit moyen de génération à arbres de décision fonctionnant selon les étapes ci-après :
(i) exploration d'un document ayant des caractères dans ladite première police, pour générer une matrice de pixels, ayant chacun un état de voisinage;
(ii) identification dans ladite matrice d'un groupe de pixels représentant un caractère;
(iii) sélection d'un pixel dans ledit groupe;
(iv) détermination de l'état de voisinage dudit pixel exactement de la même manière que lorsque l'état de voisinage a été déterminé pour chaque pixel dans la deuxième police;
(v) adressage de ladite mémoire avec l'état de voisinage dudit pixel sélectionné;
(vi) lecture dans ladite mémoire de la probabilité que ledit pixel sélectionné soit de ladite couleur discernable, associée à l'état de voisinage dudit pixel sélectionné, et affectation de ladite probabilité audit pixel sélectionné;
(vii) répétition des étapes (iii) à (vi) afin de sélectionner d'autres pixels dans ledit groupe; et
(viii) génération d'un nouvel arbre de décision pour ladite première police en utilisant lesdites probabilités affectées de ladite couleur discernable sans se fier à aucun des arbres de décision pré-existants.

9. Méthode d'identification de caractères, dans une police inconnue, au moyen d'un dispositif optique de reconnaissance de caractères utilisant un arbre de décision pour interpréter des pixels, l'arbre de décision étant créé selon les étapes de méthode ci-après :
exploration d'un document écrit dans une première police pour générer une matrice de pixels;
pour chaque pixel dans ladite matrice, identification d'une matrice présélectionnée de pixels voisins, à titre de voisinage de pixels;
détermination à partir de ladite matrice de pixels de la probabilité qu'un pixel sélectionné se trouve dans une première couleur discernable, étant donné l'état de voisinage du pixel;
stockage d'une table de probabilité fournissant, pour chaque pixel, un état de voisinage, la probabilité du pixel sélectionné étant ladite couleur discernable;
exploration d'un document écrit dans une police inconnue, pour générer une deuxième matrice de pixels;
identification dans ladite matrice d'une pluralité de groupes de pixels, chaque groupe étant représentatif d'un caractère;
pour chacun d'une pluralité de pixels dans chacun desdits groupes, identification de ladite matrice présélectionnée de pixels voisins à titre de voisinage de pixels, établissement de l'état de voisinage de ce pixel d'après ledit voisinage de pixels, adressage de ladite table par l'état de voisinage de ce pixel, et lecture dans ladite table de la probabilité que ledit pixel soit dans ladite couleur discernable; et
génération d'un nouvel arbre de décision pour ladite police inconnue, en utilisant les probabilités de ladite table pour les pixels sélectionnés, sans se fier à aucun des arbres de décision pré-existants.

10. Méthode selon la revendication 9, dans laquelle l'état de voisinage de chaque pixel comprend une somme pondérée de valeurs affectées aux pixels dans ladite matrice, d'après leurs positions dans ladite matrice.

11. Méthode selon la revendication 9 ou la revendication 10, comprenant en plus :
la comparaison d'une pluralité de groupes représentant le même caractère imprimé; et
la formation d'un groupe moyen pour chaque caractère, par affectation à chaque pixel dans ledit groupe moyen de ladite couleur discernable si le pixel correspondant, dans au moins la moitié des blocs comparés, est de ladite couleur discernable.

12. Méthode de contrôle d'un dispositif OCR conçu pour identifier des caractères écrits dans une police inconnue en utilisant un arbre de décision pour interpréter des pixels, afin d'effectuer ladite identification, l'arbre de décision étant généré en utilisant des probabilités que les pixels aient une première couleur discernable, lesdites probabilités étant affectées aux pixels par la succession d'étapes ci-après :
(a) exploration d'un document de référence écrit dans une première police et conversion dudit document de référence exploré en une matrice de pixels, dans lequel :
(i) chaque pixel converti a, soit une première couleur, soit une deuxième couleur; et
(ii) chaque pixel converti a un voisinage comprenant un nombre prédéterminé de pixels voisins dudit pixel converti; et
(iii) ledit voisinage présente un état de voisinage déterminé par les couleurs des pixels voisins;
(b) détermination, pour chaque pixel dudit document de référence exploré, de la couleur de ce pixel;
(c) détermination, pour chaque pixel dudit document de référence exploré, de son état de voisinage;
(d) division du nombre de fois qu'un pixel se trouvant dans le voisinage et ayant un premier état de voisinage a ladite première couleur par le nombre de fois, dans ledit document exploré, que se manifeste ledit premier état de voisinage dans ledit document de référence, pour obtenir la probabilité qu'un pixel ait ladite première couleur, sachant que son voisinage présente ledit premier état de voisinage;
(e) répétition de l'étape (d) pour chaque état de voisinage possible, afin de générer une table de probabilité comprenant une liste de tous les états de voisinage possibles et de la probabilité associée de chaque pixel sélectionné ayant ladite première couleur;
(f) stockage de ladite table de probabilité dans ledit dispositif OCR; et
(g) exploration d'un deuxième document, écrit dans une deuxième police inconnue, et conversion dudit deuxième document en une matrice de pixels, dans laquelle :
(i) chaque pixel converti a, soit une première couleur, soit une deuxième couleur;
(ii) chaque pixel converti a un voisinage comprenant un nombre prédéterminé de pixels voisins dudit pixel converti, dans lequel ledit voisinage a des pixels voisins correspondant au voisinage des pixels dudit document de référence; et
(iii) ledit voisinage présente un état de voisinage déterminé par les couleurs desdits pixels de voisinage;
(h) détermination, pour chacun parmi une pluralité sélectionnée de pixels convertis dans ledit groupe, de son état de voisinage; et
(i) pour chaque pixel converti sélectionné, consultation de l'état de voisinage correspondant dans ladite table de probabilité stockée en mémoire et lecture dans ladite table de probabilité de la probabilité que ledit pixel présente ladite première couleur.

13. Méthode selon la revendication 12, dans laquelle ladite étape d'exploration dudit deuxième document comprend :
identification d'un premier caractère se trouvant dans ledit deuxième document et défini par les pixels se trouvant dans un groupe de pixels;
détermination pour savoir si ledit premier caractère apparaît plus qu'une fois dans ledit deuxième document; et
si ledit premier caractère apparaît plus qu'une fois dans ledit deuxième document, formation de la moyenne entre une pluralité des apparitions dudit premier caractère pour obtenir un premier caractère moyen.

14. Méthode selon la revendication 13, dans laquelle ladite étape de formation de moyenne dudit premier caractère comprend :
la comparaison des différentes occurrences dudit premier caractère;
détermination, pour chaque pixel dans la fenêtre de caractères, pour chaque dit premier caractère, du fait que le pixel présente ladite première couleur plus souvent que ladite deuxième couleur;
pour chaque pixel présentant ladite première couleur plus souvent que ladite deuxième couleur, ce pixel est considéré avoir ladite première couleur dans ledit premier caractère ayant fait l'objet de la formation de moyenne; et
pour chaque pixel présentant ladite deuxième couleur plus souvent que ladite première couleur, ce pixel est considéré présenter ladite deuxième couleur dans ledit premier caractère ayant fait l'objet de la formation d'une moyenne.
